# EUROPEAN PATENT SPECIFICATION

(11) **EP 3 855 093 B1**
(45) Date of publication and mention of the grant of the patent: **19.07.2023**
(21) Application number: 20153195.1
(22) Date of filing: 22.01.2020
(51) Int. Cl.: F25B 1/047, F04D 27/00, F04D 29/063, F25B 1/053, F25B 41/22, F25B 49/02, F04D 27/02

(54) **COMPRESSOR SYSTEM WITH MULTIPLE COMPRESSOR ELEMENTS AND ASSOCIATED OPERATING METHOD**
VERDICHTERSYSTEM MIT MEHREREN VERDICHTERELEMENTEN UND ASSOZIIERTES BETRIEBSVERFAHREN
SYSTÈME DE COMPRESSEUR COMPORTANT DE MULTIPLES ÉLÉMENTS DE COMPRESSEUR ET PROCÉDÉ D'OPÉRATION ASSOCIÉ

(43) Date of publication of application: 28.07.2021
(73) Proprietor: Carrier Corporation, Palm Beach Gardens, FL 33418 (US)
(72) Inventor: FONTE, Nicolas, 01120 Montiuel (FR); HUGO, Henry, 01120 Montiuel (FR)
(74) Representative: Dehns

(56) References cited:
- EP-A2- 1 614 983
- WO-A1-2005/103492
- US-A- 2 178 100
- US-A1- 2018 274 830

## Description

The present invention relates to a compressor system using multiple compressor elements for compression of refrigerant fluid, as well as to a corresponding method for operating such a compressor system.

It is required to compress refrigerant fluid in various types of refrigeration circuit using a refrigeration cycle. This includes refrigeration cycles used for providing cooling, such as in refrigerated storage and/or air conditioning systems, as well as refrigeration cycles used for providing heating, such as in the case of heat pumps. A typical compressor requires lubrication, which can come from the refrigerant fluid more often involves an added lubricant. It is important to handle the lubricant effectively. Some known compressors use multiple compressor elements, in particular multiple parallel compressor elements allowing for variation in load by activating or de-activating one or more compressor elements to adjust the compression capacity. This type of arrangement is known for compressor elements such as scroll compressors or rotary compressors.

US 2018/0274830 A1 discloses a compressor system including three compressors and an equalization line that fluidly couples each of the compressors, the equalisation line providing a single path for passage of fluids between each compressor, the compressor system also including an obstruction device disposed in the equalisation line to deactivate one of the compressors.

US 2178100 A discloses a condensing unit having dual interconnected compressors with a means to insure a safe oil level in both compressors.

The invention as defined by appended independent claim 1 provides a compressor system for compression of refrigerant fluid, the compressor system comprising: a first compressor element for compression of the refrigerant fluid, the first compressor element being within a first compressor element housing; a second compressor element for compression of the refrigerant fluid, the second compressor element being within a second compressor element housing; an equalisation line that fluidly connects the first and second compressor element housings at the suction side in order to allow for equalisation of pressure between the first and second compressor element housings as well as flow of lubricant between the compressor element housings; and an equalisation valve on the equalisation line for opening and closing the connection between the first and second compressor element housings via the equalisation line; wherein the compressor system is arranged for full load operation using both the first and second compressor elements as well as for part load operation in which one of the compressor elements is not utilised; wherein the compressor system is arranged to open the equalisation valve during full load operation; and wherein the compressor system is arranged to close the equalisation valve during part load operation to thereby prevent movement of lubricant and/or refrigerant fluid between the first and second compressor element housings during part load operation; and wherein the compressor elements provide differing capacities and/or at least one compressor element provides a varying capacity.

With this arrangement the equalisation line allows for movement of fluid between the suction sides of the first and second compressor element housings, thereby enabling equalisation of pressure via movement of lubricant and/or refrigerant fluid. The equalisation line is always closed during part load operation when one of the first and second compressor elements is not utilised. This is significant since otherwise the suction in the operational compressor element housing would draw lubricant across from the inactive compressor element housing, leading to imbalances in operation and inefficiencies due to excessive lubrication of the compressor element. As well as that, there would be a risk of excess lubricant being circulated in a refrigeration circuit with the compressed refrigerant from the compressor system. Closure of the equalisation valve also means that refrigerant fluid cannot flow along the equalisation line during part load operation, i.e. that recirculation of gas/gas bypass is prevented.

Thus, the equalisation line, combined with the equalisation valve and closure thereof during part load operation, have the result that lubricant can be more effectively distributed during full load operation whilst ensuring that unwanted redistribution of lubricant is avoided during part load operation. The compressor system can always operate with optimised distribution of lubricant, which increases the volumetric compression efficiency.

It is important to note that the proposed arrangement differs from multiple compressor element compressor systems using equalisation lines at the discharge side rather than the suction side of the compressor element housings. Such systems tend to have different forms and differing requirements for distribution of lubricant. As well as differing from the use of equalisation lines at the discharge side, the proposed arrangement also differs considerably from compressor systems requiring more complex arrangements for separation and distribution of lubricant. In particular, in example embodiments the present compressor system does not comprise a separator for separation of lubricant from refrigerant. The compressor system may rely on gravity and/or acceleration forces from movement of the compressor elements for separation of lubricant. Alternatively or additionally the compressor system does not comprise a means for active distribution of lubricant. Instead the compressor system advantageously relies on passive distribution of lubricant driven by pressure differentials generated by the compressor elements in order to move lubricant between the compressor element housings. Thus, the compressor system does not comprise a lubricant pump, for example.

Each compressor element housing may include a lubricant sump, typically at the base of the housing, i.e. the lower most part thereof when the compressor is in use. The equalisation line may provide a connection between the lubricant sumps of the first and second compressor element housings, which falls under the present invention only if the sumps are located at the suction sides of the housings. Thus, there is predominantly movement of lubricant during equalisation of pressures when the first and second compressor elements are active with the equalisation valve open, as opposed to movement of refrigerant. The suction pressure can equalise effectively and there is correct distribution of lubricant. When both of the compressor elements are being used then if there is a differential in the suction pressures then the lower pressure compressor element housing will draw lubricant across from the higher pressure compressor element housing and the suction pressures will become balanced due to the lubricant movement. Conversely, the amount of lubricant within the compressor element housing impacts on the compression efficiency and on the internal pressures so that excessive lubricant levels in one of the compressor element housings will cause an imbalance in internal pressures, with this being balanced out automatically by movement of lubricant through the equalisation line when the equalisation valve is open.

The equalisation line is connected at the suction side of each compressor element housing. The compressor element housings each have a suction side and a discharge side. The suction side is the lower pressure side, coupled to a suction inlet port of the compressor system, and the discharge side is the higher pressure side, coupled to an outlet port of the compressor system. When the compressor element is in use refrigerant fluid enters at the suction side, is compressed by action of the compressor element, e.g. by rotational movement thereof, and moves to the discharge side, before it is expelled from the outlet port with increased pressure compared to the pressure at the inlet port.

The equalisation line connects to each compressor element housing at an equivalent location in order that the expected pressure at the opening of the equalisation line is the same during balanced operation of the compressor elements. Thus, the equalisation line connects to each compressor element housings at a similar point in terms of expected internal pressure when the compressor element is active. This allows for effective balancing of pressure without any form of active control being needed, i.e. simply with the equalisation valve open during full load operation as discussed above.

The first and/or second compressor element may be a scroll compressor element or a rotary compressor element and hence the compressor system may be a scroll compressor system or a rotary compressor system. Typically the first and second compressor elements are of the same type, but provide differing capacities and/or at least one compressor element provides a varying capacity.

The proposed suction side equalisation control may be applied to any compressor system having multiple compressor elements and using an equalisation line at the suction side. Advantageously this is done for systems without lubricant separation as discussed above. Thus, for example, the compressor elements would not be screw compressor elements or piston compressor elements where there is generally a requirement for further separation of lubricant and where it is not straightforward to apply equalisation at the suction sides.

The compressor system includes first and second compressor elements and may optionally include further compressor elements, such as a third compressor element with a corresponding compressor element housing of similar configuration to the first and second compressor element housings. In that case the compressor system may be configured for a full load mode of operation where all three compressor elements are used, as well as multiple part load modes of operation where either one or two of the compressor elements are not utilised. Where more than two compressor elements are present then the compressor system may also comprise at least one further equalisation line with a corresponding further equalisation valve. Thus, for example, with three compressor elements there may be two equalisation lines. The equalisation lines may connect the suction sides of the compressor element housings in pairs using a sequence corresponding to the sequence in which the compressor elements are deactivated during the part load modes of operation. Thus, the equalisation lines may connect the compressor element housings in series. The compressor system may be arranged to operate with selected equalisation valves closed during part load operation in order to prevent flow of fluids along the equalisation lines to or from the compressor element housing(s) of the compressor elements that are inactive during the part load operation in question.

The compressor elements may be arranged for parallel compression, i.e. in a tandem arrangement, such that adding/using further compressor elements may increase the compression capacity. The first and second compressor elements, and optional further compressor elements, may provide similar compression capacities, in which case the capacity at full load may be approximately double the capacity at part load for a two compressor element system. In any case falling under the present invention, the compressor elements either provide differing capacities and/or at least one compressor element provides a varying capacity, such as through being a variable speed compressor element. The proposed equalisation line usefully enhances operation of multiple compressor element compressor systems where there are differing and/or variable capacities.

The compressor system according to an embodiment comprises a controller, such as a microprocessor controller. The controller is arranged to control the compressor system to operate in the part load mode or full load mode. The mode may be selected according to external inputs to the controller. The controller may be a controller of a refrigeration circuit that uses the compressor system. The controller, or another control means, also controls operation of the equalisation valve, and thus is configured to automatically close the equalisation valve when the part load mode of operation is selected, as well as controlling the compressor elements accordingly.

Advantageously, the equalisation valve is of simple construction having an open state and a close state, without the need for a controllable variable degree of opening. The equalisation valve may be a shut off valve, for example. The equalisation valve may be controlled via electronic actuation, such as by using a controller as discussed above. Alternatively, the equalisation valve may be operated mechanically with closure of the equalisation valve triggered by operating conditions of the compressor system, such as an absence of pressure in the discharge side of the second compressor element and/or a differential pressure between the two compressor elements that is beyond a set threshold. Thus, the equalisation valve may be arranged to be closed in reaction to pressure conditions that arise when the second compressor element is inactive.

The lubricant is typically oil and may be an oil selected based on the compressor element requirements as well as on the refrigerant type. When in use the compressor system may include the lubricant within the sumps of the compressor element housings with the lubricant level being vertically above the connections to the equalisation line during balanced operating conditions, i.e. with equal lubricant levels during full load operation.

The compressor system may be configured to operate with a refrigerant fluid of a suitable type for the compressor elements, and may include said refrigerant fluid in the compressor element housings when the compressor system is in use. In one example the refrigerant is a high pressure refrigerant such as R32. This has been found to give significant performance increases, in particular when paired with scroll compressor elements.

The invention further extends to a refrigeration circuit, as defined by appended dependent claim 13, comprising the inventive compressor system. This may be a circuit using a refrigeration cycle for providing heating or cooling, for example. The refrigeration circuit may comprise a heat rejecting heat exchanger, an expansion device, and a heat absorbing heat exchanger.

Also, as defined by appended independent claim 14, the invention provides a method for operating a compressor system as described above, the method including: selecting between full load operation with all compressor elements being used, and part load operation with one of the compressor elements being inactive; opening the equalisation valve during full load operation; and closing the equalisation valve during part load operation to thereby prevent movement of lubricant and/or refrigerant fluid between the first and second compressor element housings during part load operation.

The method may include using a compressor system with any of the other features discussed above and thus may comprise handling of the lubricant absent a lubricant separator and/or with passive flow of lubricant within the system, which may be absent a lubricant pump or the like. The method may include operating the compressor system within a refrigeration circuit and hence may comprise compressing refrigerant with the compressor system and circulating the refrigerant through a refrigeration cycle in order to provide heating and/or cooling.

Certain example embodiments of the present invention will now be described by way of example only and with reference to the accompanying drawings in which:
Figure 1 shows a refrigeration circuit including a compressor; and
Figures 2a and 2b are schematic diagrams of a compressor system having two compressor elements.

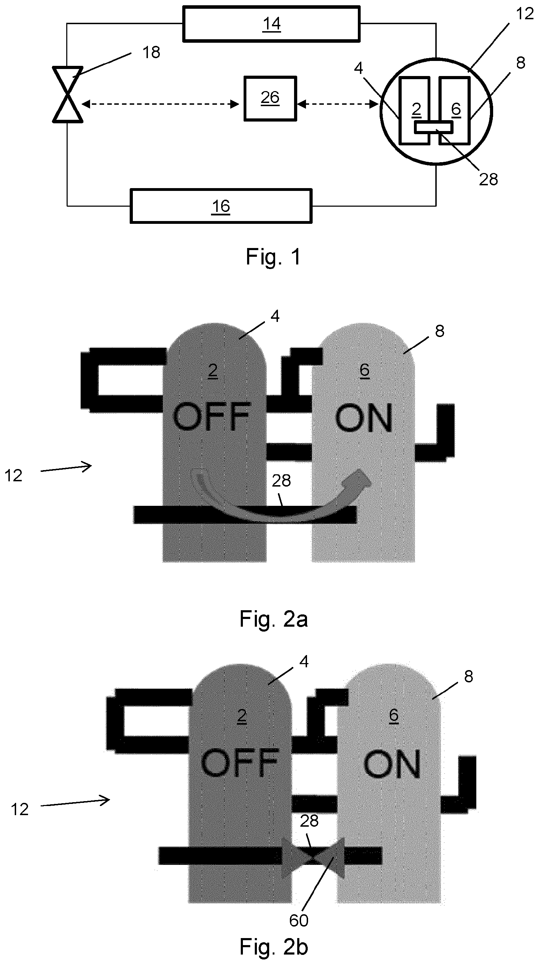

As seen in Figure 1, a refrigeration circuit includes a compressor system 12, a heat rejecting heat exchanger 14, an expansion device 18 and a heat absorbing heat exchanger 16 that operate together in a refrigeration/heat pump cycle. The heat pump system contains a refrigerant fluid and circulation of the refrigerant fluid via the compressor system 12 enables the refrigeration system to utilise a refrigeration cycle to satisfy a heating load. In this example the heat rejecting heat exchanger 14 is a condenser for at least partially condensing the refrigerant fluid, the expansion device 18 is an expansion valve for expanding the refrigerant fluid with a controllable degree of expansion, and the heat absorbing heat exchanger 16 is an evaporator for at least partially evaporating the refrigerant fluid. The refrigeration circuit may advantageously be arranged so that the fluid is fully condensed at the condenser 14, and fully evaporated at the evaporator 16.

The compressor system 12 is for compression of gaseous refrigerant fluid and for circulation of refrigerant fluid around the refrigeration circuit. The compressor system 12 includes first compressor element 2 in a first compressor element housing 4, and a second compressor element 6 in a second compressor element housing 8. The compressor elements 2, 6 may be scroll compressor elements and they are mounted in a tandem configuration, as is known in the art, allowing for the compression capacity of the compressor system 12 to be varied by using either one or both compressor elements 2, 6 as desired. The compressor elements 2, 6 provide differing capacities and/or at least one compressor element 2, 6 provides a varying capacity.

An equalisation line 28 is provided to connect suction sides of the two compressor element housings 4, 8. The operation of the equalisation line 28 is described in further detail below with reference to Figure 2b.

The refrigeration circuit is controlled by a controller 26, which may for example control the expansion device 18 and the compressor 12. Control of the refrigeration circuit may be done with reference to various inputs to the controller 26, such as temperature and/or pressure measurements relating to the refrigeration circuit and/or external temperatures, as well as user inputs and so on. The controller 26 in this example,or alternatively other control means, are configured to control an equalisation valve 60 on the equalisation line 28 as explained below.

Figures 2a and 2b show a compressor system 12 for use in a refrigeration circuit such as that of Figure 1. The compressor system 12 includes two compressor elements 2, 6, which by way of example may be scroll compressor elements 2, 6. The compression system hence comprises a first scroll compressor element 2 for compression of the refrigerant fluid within a first scroll compressor element housing 4 and a second scroll compressor element 6 for compression of the refrigerant fluid within a second compressor element housing 8. The compressor elements 2, 6 provide differing capacities and/or at least one compressor element 2, 6 provides a varying capacity.

Each compressor element housing 4, 8 has a suction side inlet and a discharge side outlet for the refrigerant fluid, and these may be configured in conventional fashion for tandem coupling of the two compressor elements 2, 6. A lubrication system is included for supplying lubricant to the compressor elements 2, 6. The lubrication system includes sumps located within respective lower portions of each compressor element housing 4, 8 as well as an equalisation line 28 that fluidly connects the first and second compressor element housings 4, 8 at their suction sides. The equalisation line 28 allows for equalisation of pressure and flow of lubricant between the first and second compressor element housings 4, 8. As shown in Figure 2b, an equalisation valve 60 is provided on the equalisation line 28 for opening and closing the connection between the compressor element housings 4, 8.

The compressor system 12 is arranged for full load operation using both the first and second scroll compressor elements 2, 6 as well as for part load operation in which one of the compressor elements 2, 6 is not utilised. Figures 2a and 2b each show a part load mode of operation where the left hand compressor element 2 is inactive. The compressor system is arranged to close the equalisation valve 60 during part load operation to thereby prevent movement of lubricant and/or refrigerant fluid between the first and second compressor element housings 4, 8 during the part load operation. The control system 26 of the refrigeration circuit can be used for control of activation of the compressor elements 2, 6 during the full/part load operating modes and may also be used for control of the equalisation valve 60. Alternatively the equalisation valve 60 may be configured to close mechanically or electro-mechanically based on a differential pressure between the two compressor element housings 4, 8, i.e. a pressure that arises during part load operation when one of the compressor elements 2, 6 is inactive.

With this arrangement the equalisation line 28 allows for equalisation of pressure via movement of lubricant and/or refrigerant fluid during full load operation, with the equalisation valve 60 open, whilst closing of the equalisation valve 60 during part load operation prevents undesirable redistribution of lubricant from the inactive compressor element housing 4 due to suction created by the active compressor element 6. This gives rise to gains in efficiency as discussed above. Tests using R32 refrigerant have shown 3% increases in compression efficiency, which is thought to mainly arise from better optimisation of the amount of lubricant (e.g. oil) that is present within the compressor element housings 4, 8 during operation of the respective compressor elements 2, 6. Closure of the equalisation valve 60 prevents the suction in the operational compressor element housing 8 from drawing lubricant across from the inactive compressor element housing 4, which would lead to imbalances in operation and inefficiencies due to excessive lubricant within the active compressor element housing 8.

In alternative arrangements, not shown in the drawings, there may be further compressor elements, such as a third compressor element with a corresponding compressor element housing. This may be of similar configurations to the first and second compressor elements 2, 6 and compressor element housings 4, 8. In that case the compressor system 12 may be configured for a full load mode of operation where all three compressor elements are used, as well as multiple part load modes of operation where either one or two of the three compressor elements are not utilised. Where further compressor elements are present then the compressor system 12 comprises at least one further equalisation line 28 with a corresponding further equalisation valve 60. Thus, for example, with three compressor elements there may be two equalisation lines 28. The equalisation lines may connect the suction sides of the compressor element housings in pairs using a sequence corresponding to the sequence in which the compressor elements are deactivated during the part load modes of operation. Thus, the equalisation lines may connect the compressor element housings in series. The compressor system 12 is operated with selected equalisation valves closed during part load operation in order to prevent flow of fluids along the equalisation lines to or from the compressor element housing(s) of the compressor elements that are inactive.

## Claims

1. A compressor system (12) for compression of refrigerant fluid, the compressor system comprising:
a first compressor element (2) for compression of the refrigerant fluid, the first compressor element (2) being within a first compressor element housing (4);
a second compressor element (6) for compression of the refrigerant fluid, the second compressor element (6) being within a second compressor element housing (8);
an equalisation line (28) that fluidly connects the first and second compressor element housings (4, 8) in order to allow for equalisation of pressure between the first and second compressor element housings (4, 8) as well as flow of lubricant between the compressor element housings (4, 8); and
an equalisation valve (60) on the equalisation line (28) for opening and closing the connection between the first and second compressor element housings (4, 8) via the equalisation line (28);
wherein the compressor system (12) is arranged for full load operation using both the first and second compressor elements ( 2, 6) as well as for part load operation in which one of the compressor elements (2, 6) is not utilised;
wherein the compressor system (12) is arranged to open the equalisation valve (60) during full load operation; and
wherein the compressor system (12) is arranged to close the equalisation valve (60) during part load operation to thereby prevent movement of lubricant and/or refrigerant fluid between the first and second compressor element housings (4, 8) during part load operation; **characterised in that**
the equalisation line (28) fluidly connects the first and second compressor element housings (4, 8) at the suction side; and
the compressor elements (2, 6) provide differing capacities and/or at least one compressor element (2, 6) provides a varying capacity.

2. A compressor system (12) as claimed in claim 1, wherein the compressor system (12) is configured for passive distribution of lubricant driven by pressure differentials generated by the compressor elements (2, 6) in order to move lubricant between the compressor element housings (4, 8).

3. A compressor system (12) as claimed in claim 1 or 2, wherein the compressor system (12) does not comprise a lubricant pump.

4. A compressor system (12) as claimed in claim 1, 2 or 3 wherein each compressor element housing (4, 8) includes a lubricant sump at the suction side and the equalisation line (28) provides a connection between the lubricant sumps of the first and second compressor element housings (4, 8).

5. A compressor system (12) as claimed in any preceding claim, wherein the equalisation line (28) connects to each compressor element housing (4, 8) at an equivalent location in order that the expected pressure at the opening of the equalisation line (28) is the same during balanced operation of the compressor elements (4, 8).

6. A compressor system (12) as claimed in any preceding claim, wherein the equalisation valve (60) is arranged to be closed in reaction to pressure conditions that arise when the second compressor element (6) is inactive.

7. A compressor system (12) as claimed in any preceding claim, being a scroll compressor system wherein the compressor elements (2, 6) are scroll compressor elements

8. A compressor system (12) as claimed in any of claims 1 to 6, being a rotary compressor system wherein the compressor elements (2, 6) are rotary compressor elements.

9. A compressor system (12) as claimed in any preceding claim, comprising at least one further compressor element.

10. A compressor system (12) as claimed in claim 9, comprising at least one further equalisation line with a corresponding further equalisation valve.

11. A compressor system (12) as claimed in claim 10, wherein the at least two equalisation lines connect the at least three compressor element housings in series.

12. A compressor system (12) as claimed in any preceding claim, comprising a controller (26) for controlling the compressor system (12) to operate in the part load mode or full load mode.

13. A refrigeration circuit comprising a compressor system (12) as claimed in any preceding claim.

14. A method for operating a compressor system (12) or refrigeration circuit as claimed in any preceding claim, the method including:
selecting between full load operation with all compressor elements (2, 6) being used, and part load operation with one of the compressor elements (2, 6) being inactive;
opening the equalisation valve (60) during full load operation; and
closing the equalisation valve (60) during part load operation to thereby prevent movement of lubricant and/or refrigerant fluid between the first and second compressor element housings (4, 8) during part load operation.

## Patentansprüche

1. Verdichtersystem (12) zum Verdichten von Kältefluid, wobei das Verdichtersystem Folgendes umfasst:
ein erstes Verdichterelement (2) zum Verdichten des Kältefluids, wobei sich das erste Verdichterelement (2) innerhalb eines ersten Verdichterelementgehäuses (4) befindet;
ein zweites Verdichterelement (6) zum Verdichten des Kältefluids, wobei sich das zweite Verdichterelement (6) innerhalb eines zweiten Verdichterelementgehäuses (8) befindet;
eine Ausgleichsleitung (28), die das erste und das zweite Verdichterelementgehäuse (4, 8) fluidisch verbindet, um einen Druckausgleich zwischen dem ersten und dem zweiten Verdichterelementgehäuse (4, 8) sowie einen Fluss von Schmiermittel zwischen den Verdichterelementgehäusen (4, 8) zu erlauben; und
ein Ausgleichsventil (60) in der Ausgleichsleitung (28) zum Öffnen und Schließen der Verbindung zwischen dem ersten und dem zweiten Verdichterelementgehäuse (4, 8) über die Ausgleichsleitung (28);
wobei das Verdichtersystem (12) für einen Volllastbetrieb unter Verwendung sowohl des ersten als auch des zweiten Verdichterelements (2, 6) sowie für einen Teillastbetrieb, in dem eines der Verdichterelemente (2, 6) nicht eingesetzt wird, angeordnet ist;
wobei das Verdichtersystem (12) angeordnet ist, um das Ausgleichsventil (60) während des Volllastbetriebs zu öffnen; und
wobei das Verdichtersystem (12) angeordnet ist, um das Ausgleichsventil (60) während des Teillastbetriebs zu schließen, um dadurch während des Teillastbetriebs eine Bewegung von Schmiermittel und/oder Kältefluid zwischen dem ersten und dem zweiten Verdichterelementgehäuse (4, 8) zu verhindern; **dadurch gekennzeichnet, dass**
die Ausgleichsleitung (28) das erste und das zweite Verdichterelementgehäuse (4, 8) auf der Saugseite fluidisch verbindet; und
die Verdichterelemente (2, 6) verschiedene Kapazitäten bereitstellen und/oder mindestens ein Verdichterelement (2, 6) eine variierende Kapazität bereitstellt.

2. Verdichtersystem (12) nach Anspruch 1, wobei das Verdichtersystem (12) für eine passive Verteilung von Schmiermittel, das durch Druckunterschiede angetrieben wird, die durch die Verdichterelemente (2, 6) erzeugt werden, ausgelegt ist, um Schmiermittel zwischen den Verdichterelementgehäusen (4, 8) zu bewegen.

3. Verdichtersystem (12) nach Anspruch 1 oder 2, wobei das Verdichtersystem (12) keine Schmiermittelpumpe umfasst.

4. Verdichtersystem (12) nach Anspruch 1, 2 oder 3, wobei jedes Verdichterelementgehäuse (4, 8) auf der Saugseite einen Schmiermittelsumpf beinhaltet und die Ausgleichsleitung (28) eine Verbindung zwischen dem Schmiermittelsumpf des ersten und des zweiten Verdichterelementgehäuses (4, 8) bereitstellt.

5. Verdichtersystem (12) nach einem der vorhergehenden Ansprüche, wobei die Ausgleichsleitung (28) an einem äquivalenten Ort mit jedem Verdichterelementgehäuse (4, 8) verbunden ist, damit der erwartete Druck an der Öffnung der Ausgleichsleitung (28) während des ausgeglichenen Betriebs der Verdichterelemente (4, 8) derselbe ist.

6. Verdichtersystem (12) nach einem der vorhergehenden Ansprüche, wobei das Ausgleichsventil (60) angeordnet ist, in Reaktion auf Druckbedingungen, die entstehen, wenn das zweite Verdichterelement (6) inaktiv ist, geschlossen zu werden.

7. Verdichtersystem (12) nach einem der vorhergehenden Ansprüche, bei dem es sich um ein Scrollverdichtersystem handelt, wobei die Verdichterelemente (2, 6) Scrollverdichterelemente sind.

8. Verdichtersystem (12) nach einem der Ansprüche 1 bis 6, bei dem es sich um ein Rotationsverdichtersystem handelt, wobei die Verdichterelemente (2, 6) Rotationsverdichterelemente sind.

9. Verdichtersystem (12) nach einem der vorhergehenden Ansprüche, das mindestens ein weiteres Verdichterelement umfasst.

10. Verdichtersystem (12) nach Anspruch 9, das mindestens eine weitere Ausgleichsleitung mit einem entsprechenden weiteren Ausgleichsventil umfasst.

11. Verdichtersystem (12) nach Anspruch 10, wobei die mindestens zwei Ausgleichsleitungen die mindestens drei Verdichterelementgehäuse in Reihe verbinden.

12. Verdichtersystem (12) nach einem der vorhergehenden Ansprüche, das zum Steuern des Verdichtersystems (12) eine Steuerung (26) umfasst, um in dem Teillastmodus oder in dem Volllastmodus betrieben zu werden.

13. Kühlkreis, der ein Verdichtersystem (12) nach einem der vorhergehenden Ansprüche umfasst.

14. Verfahren zum Betreiben eines Verdichtersystems (12) oder eines Kühlkreises nach einem der vorhergehenden Ansprüche, wobei das Verfahren Folgendes beinhaltet:
Auswählen zwischen einem Volllastbetrieb, in dem alle Verdichterelemente (2, 6) verwendet werden, und einem Teillastbetrieb, in dem eines der Verdichterelemente (2, 6) inaktiv ist;
Öffnen des Ausgleichsventils (60) während des Volllastbetriebs; und
Schließen des Ausgleichsventils (60) während des Teillastbetriebs, um dadurch während des Teillastbetriebs eine Bewegung von Schmiermittel und/oder Kältefluid zwischen dem ersten und dem zweiten Verdichterelementgehäuse (4, 8) zu verhindern.

## Revendications

1. Système de compresseur (12) pour la compression de fluide réfrigérant, le système de compresseur comprenant :
un premier élément compresseur (2) pour la compression du fluide réfrigérant, le premier élément compresseur (2) étant à l'intérieur d'un premier logement d'élément compresseur (4) ;
un second élément compresseur (6) pour la compression du fluide réfrigérant, le second élément compresseur (6) étant à l'intérieur d'un second logement d'élément compresseur (8) ;
une conduite d'égalisation (28) qui relie fluidiquement les premier et second logements d'élément compresseur (4, 8) afin de permettre l'égalisation de la pression entre les premier et second logements d'élément compresseur (4, 8) ainsi que l'écoulement de lubrifiant entre les logements d'éléments compresseurs (4, 8) ; et
une vanne d'égalisation (60) sur la conduite d'égalisation (28) pour ouvrir et fermer la connexion entre les premier et second logements d'élément compresseur (4, 8) via la conduite d'égalisation (28) ;
dans lequel le système de compresseur (12) est agencé pour un fonctionnement à pleine charge en utilisant à la fois les premier et second éléments compresseurs (2, 6) ainsi que pour un fonctionnement à charge partielle dans lequel l'un des éléments compresseurs (2, 6) n'est pas utilisé ;
dans lequel le système de compresseur (12) est agencé pour ouvrir la vanne d'égalisation (60) pendant le fonctionnement à pleine charge ; et
dans lequel le système de compresseur (12) est agencé pour fermer la vanne d'égalisation (60) pendant le fonctionnement à charge partielle afin d'empêcher ainsi le mouvement du lubrifiant et/ou du fluide réfrigérant entre les premier et second logements d'élément compresseur (4, 8) pendant le fonctionnement à charge partielle ; **caractérisé en ce que**
la conduite d'égalisation (28) relie fluidiquement les premier et second logements d'élément compresseur (4, 8) du côté aspiration ; et
les éléments compresseurs (2, 6) fournissent des capacités différentes et/ou au moins un élément compresseur (2, 6) fournit une capacité variable.

2. Système de compresseur (12) selon la revendication 1, dans lequel le système de compresseur (12) est configuré pour une distribution passive de lubrifiant entraîné par des différentiels de pression générés par les éléments compresseurs (2, 6) afin de déplacer le lubrifiant entre les logements d'élément compresseur (4, 8).

3. Système de compresseur (12) selon la revendication 1 ou 2, dans lequel le système de compresseur (12) ne comprend pas de pompe à lubrifiant.

4. Système de compresseur (12) selon la revendication 1, 2 ou 3, dans lequel chaque logement d'élément compresseur (4, 8) comporte un puisard de lubrifiant du côté aspiration et la conduite d'égalisation (28) fournit une connexion entre les puisards de lubrifiant des premier et second logements d'élément compresseur (4, 8).

5. Système de compresseur (12) selon une quelconque revendication précédente, dans lequel la conduite d'égalisation (28) se connecte à chaque logement d'élément compresseur (4, 8) à un emplacement équivalent afin que la pression attendue à l'ouverture de la conduite d'égalisation (28) est la même pendant le fonctionnement équilibré des éléments compresseurs (4, 8).

6. Système de compresseur (12) selon une quelconque revendication précédente, dans lequel la vanne d'égalisation (60) est agencée pour être fermée en réaction aux conditions de pression qui surviennent lorsque le second élément compresseur (6) est inactif.

7. Système de compresseur (12) selon une quelconque revendication précédente, étant un système de compresseur à spirale dans lequel les éléments compresseurs (2, 6) sont des éléments compresseurs à spirale.

8. Système de compresseur (12) selon l'une quelconque des revendications 1 à 6, étant un système de compresseur rotatif dans lequel les éléments compresseurs (2, 6) sont des éléments compresseurs rotatifs.

9. Système de compresseur (12) selon une quelconque revendication précédente, comprenant au moins un autre élément compresseur.

10. Système de compresseur (12) selon la revendication 9, comprenant au moins une autre conduite d'égalisation avec une autre vanne d'égalisation correspondante.

11. Système de compresseur (12) selon la revendication 10, dans lequel les au moins deux conduites d'égalisation connectent les au moins trois logements d'élément compresseur en série.

12. Système de compresseur (12) selon une quelconque revendication précédente, comprenant un dispositif de commande (26) pour commander le système de compresseur (12) pour qu'il fonctionne en mode à charge partielle ou en mode à pleine charge.

13. Circuit de réfrigération comprenant un système de compresseur (12) selon une quelconque revendication précédente.

14. Procédé pour faire fonctionner un système de compresseur (12) ou un circuit de réfrigération selon une quelconque revendication précédente, le procédé comportant :
la sélection entre un fonctionnement à pleine charge avec tous les éléments compresseurs (2, 6) étant utilisés, et un fonctionnement à charge partielle avec l'un des éléments compresseurs (2, 6) étant inactif ;
l'ouverture de la vanne d'équilibrage (60) pendant le fonctionnement à pleine charge ; et
la fermeture de la vanne d'égalisation (60) pendant le fonctionnement à charge partielle pour empêcher ainsi le mouvement du lubrifiant et/ou du fluide réfrigérant entre les premier et second logements d'élément compresseur (4, 8) pendant le fonctionnement à charge partielle.
